# EUROPÄISCHE PATENTSCHRIFT

(11) **EP 1 361 171 B1**
(45) Veröffentlichungstag und Bekanntmachung des Hinweises auf die Patenterteilung: **17.03.2010**
(21) Anmeldenummer: 03009156.5
(22) Anmeldetag: 22.04.2003
(51) Int. Cl.: B65D 65/40, B32B 7/12, C08J 7/04

(54) **Kunststoff-Folie**
Plastic film
Film plastique

(30) Priorität: 11.05.2002 DE 10121141
(43) Veröffentlichungstag der Anmeldung: 12.11.2003
(73) Patentinhaber: Huhtamaki Ronsberg Zweigniederlassung der Huhtamaki Deutschland GmbH & Co. KG., 87671 Ronsberg (DE)
(72) Erfinder: Battegazzore, Rinaldo, Dr., 15058 Viauzzolo (IT); Michalsky, Andreas, 87671 Ronsberg (DE); Hertleln, Jochen, Dr., 61118 Bad Vilbel (DE); Bachmann, Rolf, 1800 Vevey (CH)
(74) Vertreter: Trossin, Hans-Jürgen

(56) Entgegenhaltungen:
- EP-A- 0 870 695
- EP-A- 0 891 930
- WO-A-01/25109
- DE-A- 19 948 286
- US-A- 3 978 260
- US-B1- 6 420 004

## Beschreibung

Die Erfindung bezieht sich auf eine Kunststoffolie, insbesondere zum Verpacken von quaderförmigen Gegenständen, wie besonders Suppenwürfeln, mit einer Basisfolie aus einem Polyolefin oder Polyethylenterephthalat, die vorzugsweise einseitig metallisiert ist, wobei als Basisfolie eine orientierte Polypropylen-Folie, vorzugsweise eine biaxial orientierte Polypropylen-Folie oder eine PET-Folie vorgesehen ist, auf deren einer, vorzugsweise die Metallisierung tragender Seite ein Druckauftrag vorgesehen ist, der seinerseits einen bei erhöhter Temperatur siegelnden Siegellack trägt, der faconartig aufgetragen ist.

Aus DE-A-199 48 286 ist eine Kunststoffolie, insbesondere zum Verpacken von vorzugsweise würfelförmigen Produkten, wie z.B. Suppenwürfeln, bekannt, wobei die Kunststoffolie aus einer Polyolefinfolie, vorzugsweise PE oder PP besteht.

Aus der WO 01/25109 ist eine weitere gattungsgemäße Kunststoffolie bekannt, die zum Verpacken von Suppenwürfeln, eingesetzt wird.

Hiervon ausgehend liegt der Erfindung die Aufgabe zugrunde, eine derartige Kunststoff-Folie zu schaffen, die eine völlig ebene Oberfläche aufweist und dadurch einerseits ein gleichmäßiges Aufrollen der Folie ermöglicht und andererseits die Herstellung einer dichten Verpackung sicherstellt.

Diese Aufgabe wird erfindungsgemäß dadurch gelöst, daß die vom Siegellack freien Flächen des Druckauftrages bzw. der Metallisierung mit einem ebenfalls faconartig aufgebrachten Überlack versehen sind.

Dadurch sind auch diese Bereiche des Druckbildes bzw. der Metallisierung, genauso wie die mit Siegellack beschichteten, geschützt und die Dicke der Folie bleibt über die ganze Breite konstant, so daß ein gleichmäßiges Aufwickeln der Folie ermöglicht wird. Der Dickenunterschied zwischen den mit Siegellack versehenen Bereichen und denen, die keinen Siegellack aufweisen, wird durch den Überlack ausgeglichen.

Einfach oder biaxial orientierte Polypropylen-Folie wie auch PET-Folie hat sehr günstige Dichtigkeitswerte, die durch eine einseitige Metallisierung noch verbessert werden.

Der faconartig aufgetragene Siegellack erlaubt einen dichten Verschluß einer aus dieser Kunststoffolie um den Gegenstand gefalteten Packung, wobei durch den faconartigen Auftrag nur soviel Siegellack eingesetzt wird, wie für das Verschließen notwendig ist.

Eine weitere vorteilhafte Ausgestaltung der Erfindung liegt darin, daß zwischen der Metallisierung und dem Druckauftrag eine Primer- bzw. Haftvermittlerschicht vorgesehen ist.

Als sehr vorteilhaft hat es sich erwiesen, wenn gemäß einer weiteren vorteilhaften Ausgestaltung der Erfindung als Basisfolie eine kompakte Folie vorgesehen ist. Erfindungsgemäß kann jedoch auch als Basisfolie eine Folie mit Hohlräumen vorgesehen sein.

Beide Folientypen haben sich hierbei sehr gut bewährt, wobei die Folie mit Hohlräumen weitgehend undurchsichtig erscheint, weil an den Rändern der Hohlräume Lichtbrechungen erfolgen.

Die Hohlräume können dabei als Vakuolen ausgebildet sein, die beim Strecken der Folie entstanden sind.

Es ist aber auch möglich, die Hohlräume durch Aufschäumen zu erzeugen.

Bei Verwendung einer kompakten Basisfolie ist erfindungsgemäß eine Stärke von etwa 10 bis 100 µm, vorzugsweise 20 bis 50 µm, insbesondere 28 bis 32 µm für diese Folie vorgesehen.

Wird dagegen eine Basisfolie mit Hohlräumen eingesetzt, so hat sich eine Stärke von etwa 10 bis 100 µm, vorzugsweise 20 bis 50 µm, insbesondere 35 bis 40 µm als vorteilhaft erwiesen.

Bei einer weiteren vorteilhaften Ausgestaltung der Erfindung ist vorgesehen, daß die vom Druckauftrag abgekehrte, vorzugsweise innere Seite der Basisfolie mit wenigstens einer weiteren Schicht versehen ist.

In der Zeichnung ist die Erfindung anhand eines Ausführungsbeispiels veranschaulicht. Dabei zeigen:
- Fig.1: einen schematischen Querschnitt eines Folienaufbaues mit einer klaren Folie und
- Fig.2: einen schematischen Querschnitt eines weiteren Folienaufbaues mit einer opaken Folie.

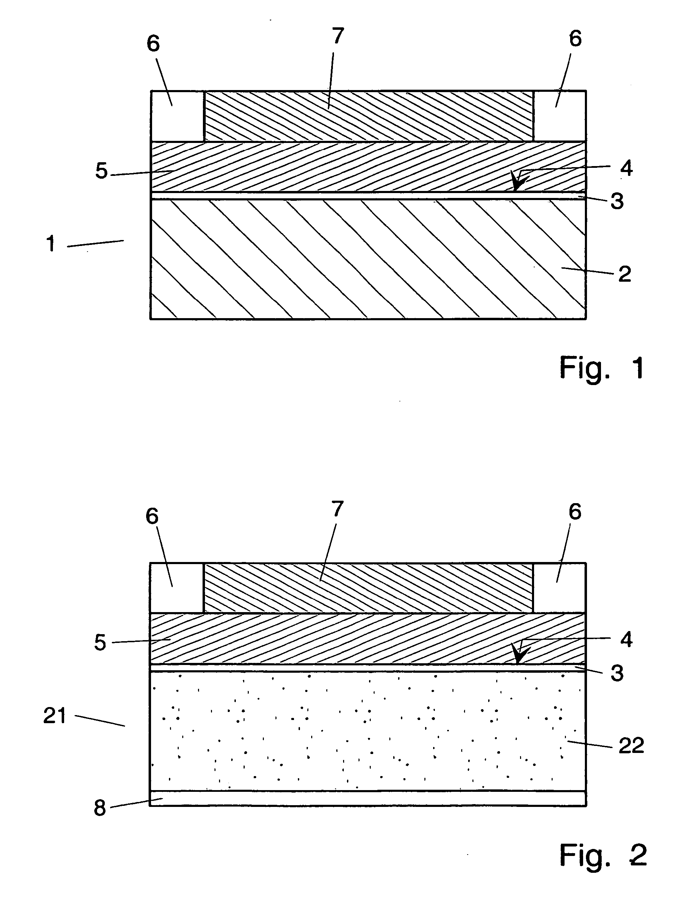

Mit 1 ist in Fig.1 eine Kunststoffolie bezeichnet, die eine Basisfolie 2 aufweist, welche aus orientiertem Polypropylen (OPP) besteht. Die Orientierung kann dabei in einer Richtung oder auch biaxial durchgeführt sein. Diese Basisfolie 2 ist einseitig mit einer Metallisierung 3 versehen. Die Metallisierung 3 ist auf ihrer von der Basisfolie 2 abgewandten Seite mit einer Primerschicht 4 zur besseren Haftvermittlung versehen, die ihrerseits einen Druckauftrag 5 trägt. Auf diesen Druckauftrag 5 ist faconartig ein bei erhöhter Temperatur siegelnder Siegellack 6 aufgetragen, wobei die von diesem Siegellack 6 freien Flächenabschnitte mit einem Überlack 7 versehen sind.

Für die Basisfolie 2 aus orientiertem Polypropylen (OPP) hat sich eine Stärke von 30µm bewährt. Die Auftragsflächen des Siegellackes 6 sind so angeordnet, daß beim Auffalten eines Abschnittes der Kunststoffolie 1 um einen nicht dargestellten quaderförmigen Gegenstand dichte Verschlüsse hergestellt werden können.

Das Ausführungsbeispiel einer Kunststoffolie 21 nach Fig.2 unterscheidet sich im wesentlichen dadurch, daß als Basisfolie 22 eine opake und orientierte Polypropylenfolie (OPP) verwendet ist, deren Stärke 38µm beträgt.

Die Opazität der Basisfolie wird beim Recken (orientieren) erzeugt, wobei in der Folie Vakuolen entstehen, welche eine Lichtbrechung hervorrufen.

Die Hohlräume können aber auch durch Aufschäumen der Folie erzeugt werden.

Auch hierbei trägt die Basisfolie 22 einseitig eine Metallisierung 3, auf der über eine Primerschicht 4 ein Druckauftrag 5 aufgebracht ist. Auf diesem Druckauftrag 5 ist wieder ein Siegellack 6 faconartig aufgetragen, so daß dieser nur an den beim Aufrichten und Verschließen einer Verpackung notwendigen Stellen vorliegt. Die verbleibenden Flächenabschnitte sind wieder mit einem Überlack 7 versehen.

Für den Überlack 7 ist eine Auftragsstärke von 1 bis 5 g/m² vorgesehen, diese Stärke kann je nach Bedarf zwischen 0,1 bis 15 g/m² variieren und ist an die Auftragsstärke des Siegellacks 6 angepasst.

Die von der Metallisierung abgekehrte Seite der Basisfolie 22 kann -wie dargestelltmit einer weiteren Beschichtung 8 versehen sein, um weitere Barriereeigenschaften zu erzielen.

Anstelle einer Polypropylen-Folie kann auch eine PET-Folie als Basisfolie eingesetzt werden.

## Patentansprüche

1. Kunststoffolie(1,21), insbesondere zum Verpacken von quaderförmigen Gegenständen, wie besonders Suppenwürfeln, mit einer Basisfolie(2,22) aus einem Polyolefin oder Polyethylenterephthalat, die vorzugsweise einseitig metallisiert ist, wobei als Basisfolie(2,22) eine orientierte Polypropylen-Folie, vorzugsweise eine biaxial orientierte Polypropylen-Folie oder eine PET-Folie vorgesehen ist, auf deren einer, vorzugsweise die Metallisierung(3) tragender Seite ein Druckauftrag(5) vorgesehen ist, der seinerseits einen bei erhöhter Temperatur siegelnden Siegellack(6) trägt, der faconartig aufgetragen ist, **dadurch gekennzeichnet, daß** die vom Siegellack(6) freien Flächen des Druckauftrages(5) mit einem ebenfalls faconartig aufgebrachten Überlack(7) versehen sind.

2. Kunststoffolie nach Anspruch 1, **dadurch gekennzeichnet, daß** zwischen der Metallisierung(3) und dem Druckauftrag(5) eine Primer- bzw. Haftvermittlerschicht(4) vorgesehen ist.

3. Kunststoffolie nach einem der Ansprüche 1 oder 2, **dadurch gekennzeichnet, daß** als Basisfolie(2) eine kompakte Folie vorgesehen ist.

4. Kunststoffolie nach einem der Ansprüche 1 oder 2, **dadurch gekennzeichnet, daß** als Basisfolie(22) eine Folie mit Hohlräumen vorgesehen ist.

5. Kunststoffolie nach Anspruch 4, **dadurch gekennzeichnet, daß** die Hohlräume als Vakuolen ausgebildet sind, die beim Strecken der Folie entstanden sind.

6. Kunststoffolie nach Anspruch 4, **dadurch gekennzeichnet, daß** die Hohlräume durch Aufschäumen entstanden sind.

7. Kunststoffolie nach Anspruch 3, **dadurch gekennzeichnet, daß** die kompakte Basisfolie(2) eine Stärke von etwa 10 bis 100 µm, vorzugsweise 20 bis 50 µm, insbesondere 28 bis 32 µm aufweist.

8. Kunststoffolie nach Anspruch 4, **dadurch gekennzeichnet, daß** die Hohlräume aufweisende Basisfolie(22) eine Stärke von etwa 10 bis 100 µm, vorzugsweise 20 bis 50 µm, insbesondere 35 bis 40 µm aufweist.

9. Kunststoffolie nach einem der vorhergehenden Ansprüche, **dadurch gekennzeichnet, daß** die vom Druckauftrag(5) abgekehrte, vorzugsweise innere Seite der Basisfolie(2,22) mit wenigstens einer weiteren Schicht(8) versehen ist.

## Claims

1. A plastics film (1,21), in particular for packaging parallelepipedal objects, such as in particular stock cubes, with a base film (2,22) consisting of a polyolefin or polyethylene terephthalate, which is preferably metal-coated on one side, wherein an oriented polypropylene film, preferably a biaxially oriented polypropylene film or a PET film, is provided as the base film (2,22), on one side of which, preferably the side carrying the metallic coating (3), a printed coating (5) is provided which, in turn, has a sealing lacquer (6) which seals at an elevated temperature and to which a pattern-coating is applied, **characterised in that** the surfaces of the printed coating (5) free of the sealing lacquer (6) are provided with an overlacquer (7) which is likewise applied as a pattern-coating.

2. A plastics film according to Claim 1, **characterised in that** a primer or adhesion promoter layer(4) is provided between the metallic coating (3) and the printed coating(5).

3. A plastics film zone according to either Claim 1 or Claim 2, **characterised in that** a compact film is provided as the base film (2).

4. A plastics film according to either Claim 1 or Claim 2, **characterised in that** a film with cavities is provided as the base film (22).

5. A plastics film according to Claim 4, **characterised in that** the cavities take the form of vacuoles which are formed when the film is stretched.

6. A plastics film according to Claim 4, **characterised in that** the cavities are formed by foaming.

7. A plastics film according to Claim 3, **characterised in that** the compact base film (2) has a thickness of approximately 10 to 100 µm, preferably 20 to 50 µm, in particular 28 to 32 µm.

8. A plastics film according to Claim 4, **characterised in that** the base film (22) having cavities has a thickness of approximately 10 to 100 µm, preferably 20 to 50 µm, in particular 35 to 40 µm.

9. A plastics film according to any one of the preceding Claims, **characterised in that** the side of the base film (2,22) facing away from the printed coating (5), preferably the inner side thereof, is provided with at least one further layer (8).

## Revendications

1. Feuille plastique (1, 21), notamment pour l'emballage d'objets parallélépipédiques tels que des cubes de bouillon en particulier, avec une feuille de base (2, 22) en polyoléfine ou en polyéthylène téréphtalate métallisée de préférence sur une face, une feuille de polypropylène orientée, de préférence une feuille de polypropylène orientée bi-axialement ou une feuille PET étant prévue comme feuille de base (2, 22), sur une face de laquelle, de préférence la face supportant la métallisation (3), est prévue une impression (5), laquelle supporte elle-même une laque de scellage (6) réalisant un scellage sous température élevée et appliquée à façon, **caractérisée en ce que** les surfaces de l'impression (5) exemptes de laque de scellage (6) sont pourvues d'une surlaque également appliquée à façon.

2. Feuille plastique selon la revendication 1, **caractérisée en ce qu'**une couche primaire ou d'agent d'accrochage (4) est prévue entre la métallisation (3) et l'impression(5).

3. Feuille plastique selon l'une des revendications 1 ou 2, **caractérisée en ce qu'**une feuille compacte est prévue comme feuille de base (2).

4. Feuille plastique selon l'une des revendications 1 ou 2, **caractérisée en ce qu'**une feuille avec des cavités est prévue comme feuille de base (2).

5. Feuille plastique selon la revendication 4, **caractérisée en ce que** les cavités sont réalisées comme des vacuoles formées lors de l'étirage de la feuille.

6. Feuille plastique selon la revendication 4, **caractérisée en ce que** les cavités ont été formées par moussage.

7. Feuille plastique selon la revendication 3, **caractérisée en ce que** la feuille de base compacte (2) présente une épaisseur comprise entre 10 et 100 µm environ, de préférence entre 20 et 50 µm, en particulier entre 28 et 32 µm.

8. Feuille plastique selon la revendication 4, **caractérisée en ce que** la feuille de base (22) comportant les cavités présente une épaisseur comprise entre 10 et 100 µm environ, de préférence entre 20 et 50 µm, en particulier entre 35 et 40 µm.

9. Feuille plastique selon l'une des revendications précédentes, **caractérisée en ce que** la face de la feuille de base (2,22) éloignée de l'impression (5), de préférence sa face intérieure, est pourvue d'au moins une autre couche (8).
